# EUROPÄISCHE PATENTSCHRIFT

(11) **EP 0 500 867 B1**
(45) Veröffentlichungstag und Bekanntmachung des Hinweises auf die Patenterteilung: **02.11.1994**
(21) Anmeldenummer: 91915746.1
(22) Anmeldetag: 27.08.1991
(51) Int. Cl.: E04C 5/16, F16B 31/00, F16B 37/00, F16B 7/18

(54) **SCHRAUBMUFFENVERBINDUNG**
SCREWED SLEEVE JOINT
JOINT A MANCHONS TARAUDES

(30) Priorität: 29.08.1990 DE 4027230
(43) Veröffentlichungstag der Anmeldung: 02.09.1992
(73) Patentinhaber: Wayss & Freytag Aktiengesellschaft, D-60486 Frankfurt (DE)
(72) Erfinder: SCHIMPFF, Frithjof, D-6200 Wiesbaden (DE); KNODEL, Rolf, D-6233 Kelkheim (DE); WENDT, Andreas, D-6240 Königstein (DE)
(86) Internationale Anmeldenummer: DE9100676
(87) Internationale Veröffentlichungsnummer: WO9204514

(56) Entgegenhaltungen:
- BE-A- 899 370
- DE-C- 3 131 078
- US-A- 3 415 552
- US-A- 3 901 122

## Beschreibung

Die Erfindung betrifft eine Schraubmuffenverbindung - vornehmlich für Bewehrungsstäbe -, wie sie im Oberbegriff des Anspruchs 1 beschrieben ist.

Die Muffen der bekannten Schraubmuffenverbindungen sind zylindrisch oder mit Sechskantquerschnitt auf ihre ganze Länge mit gleichbleibender Kontur ausgebildet.

Es sind Spannstabmuffen bekannt, die an ihren Enden konische Fasen aufweisen. Diese haben den Zweck in den sich ebenfalls konisch erweiternden, der Muffenform angepaßten Hüllrohren einen möglichst gleichmäßigen Fluß des Verpreßmörtels beim Verpressen zu bewirken.

Aus der DE PS 17 84 382 ist eine Schraubmuffenverbindung von Bewehrungsstäben bekannt, bei der die Stabenden der Bewehrungsstäbe mit einem im Gewinde-Endbereich konisch auslaufenden Gewinde versehen sind. Die Stabenden werden mit Gewalt in eine sich im Endbereich entsprechend nicht verjüngende Muffe eingedreht. Der konische Gewinde-Endbereich wird dabei je nach dem aufgewendeten Drehmoment unterschiedlich weit in die Muffe eingeschraubt. In der Regel verbleibt ein Gewinderest außerhalb der Muffe. Beim Aufdrehen der unverschwächten Muffe auf das Stabendgewinde schneidet das Muffengewinde vornehmlich mit einem kurzen Endbereich in ein relativ kleines Gewindestück auf dem konisch auslaufenden Stabkern ein und verformt diesen Bereich. Die Kraftübertragung vom Stab in die Muffe geschieht dabei bevorzugt in diesem kurzen verformten Bereich , bis dieser Bereich sich verformt und weitere Gewindebereiche zum Tragen kommen. Dieser Verformungsvorgang bewirkt einen unerwünschten Schlupf, der ein gewisses zulässiges Maß nicht überschreiten darf.

Die erfindungsgemäße Ausbildung der Muffe soll diesen Schlupf vermindern und darüber hinaus die statische und dynamische Tragkraft der Stabverbindung erhöhen.

Dies wird durch die im kennzeichnenden Teil des Anspruchs 1 angegebene Ausbildung der Muffe erreicht. Durch eine der Krafteintragung aus dem Stab in die Muffe entsprechend ausgebildete progressive anwachsende Kontur der Muffe, die einem progressiven Wachstum des Muffenquerschnitts entspricht, wird die Muffe gegen ihr Ende hin zunehmend verformbar und dehnt sich beim Aufdrehen mit einem bestimmten Moment auf die Stabendgewinde. Dadurch wird der gesamte konisch auslaufende Gewindebereich kraftschlüssig von der Muffe umspannt, der Schlupf wesentlich vermindert und eine höhere statische und dynamische Tragfähigkeit der Muffenverbindung erreicht.

Die Erzeugende der vom Muffenende progressiv nach außen wachsenden Kontur der Muffe kann beispielsweise parabolisch, hyperbolisch, exponential, sinusförmig oder polygonal sein.

In Ausgestaltung der Erfindung wird die Muffe an beiden Enden der Bohrung mit Fasen versehen. Diese Fasen verhindern Spannungsspitzen in den anschließenden Stäben, die bei scharfkantigen inneren Muffenenden entstehen und die Dauerschwingfestigkeit vermindern. Die Fasen erhalten zweckmäßig eine lineare oder eine gekrümmte, vom Muffenende degressiv nach innen wachsende Kontur.

In einer weiteren Ausgestaltung der Erfindung erhält die Muffe zum Schutz gegen ein radiales Aufreißen der Muffenenden durch eine ungewollte Überschreitung des für das Eindrehen der Stabenden in die Muffe festgelegten Drehmomentes eine solche Länge, daß nach vorschriftsmäßigem Eindrehen der Stabenden in die Muffe zwischen den Stirnflächen der Stabenden noch ein geringer Zwischenraum verbleibt. Dieser Zwischenraum ist gerade so groß bemessen, daß bei Überschreitung des zulässigen Drehmomentes beim Aufschrauben der Muffe eine Konterung der Stabenden eintritt. So wird verhindert, daß das Stabende unzulässig tief in die Muffe eingedreht werden kann.

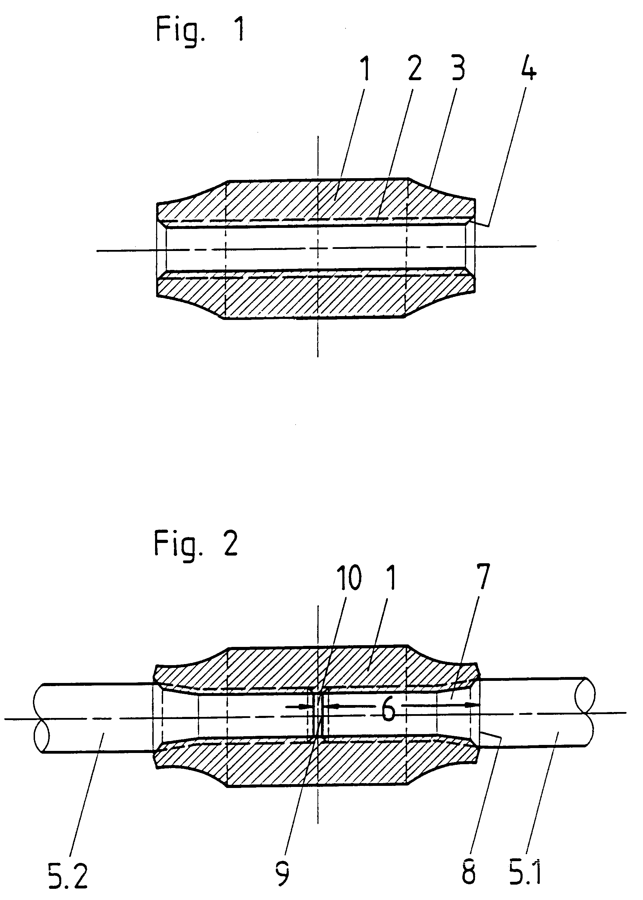

Die Erfindung wird beispielhaft durch die Figuren 1 u. 2 erläutert. Es zeigen
- Figur 1: einen Längsschnitt durch eine erfindungsgemäße Muffe
- Figur 2: einen Längsschnitt durch eine erfindungsgemäße Muffenverbindung mit der durch Eindrehen der Stabenden verformten Muffe.
Die erfindungsgemäße mit Innengewinde 2 versehene Muffe 1 weist an den beiden Endbereichen 3 eine progressiv zur Muffenmitte hin anwachsende Kontur auf. Die Muffenenden sind innen mit Fasen 4 versehen.

Figur 2 zeigt die vollständige Muffenverbindung. Die Stabenden 5/1 und 5/2 mit Stabendgewinde 6 und konisch auslaufenden Gewinde-Endbereich 7 sind bis zum Gewindeende 8 in die Muffe 1 eingedreht. Dabei haben sich die gegenüber dem mittigen Muffenquerschnitt durch progressiv ansteigende Kontur geschwächt ausgebildeten Endbereiche 3 entsprechend dem Gewindeprofil der Stabenden verformt und aufgeweitet.

Zwischen den Stirnflächen 9 der Stabenden verbleibt beim Aufbringen eines bestimmten, festzulegenden Drehmomentes beim Eindrehen der Stabenden in die Muffe ein Zwischenraum 10, dessen Breite zu null werden kann, wenn das vorgeschriebene Drehmoment überschritten wird. Die Breite des Zwischenraums 10 begrenzt die Ringdrehung des werkseitig offenen Muffenendes bei mit unzulässig großem Einschraubmoment montierten Anschlußstab auf ein Maß, das ein Aufreißen der Muffe verhindert.

## Patentansprüche

1. Schraubmuffenverbindung - vornehmlich für Bewehrungsstäbe -, die durch Einschrauben zweier Metallstäbe (5), die an ihren Stabenden (6) mit einem im Gewinde-Endbereich (7) konisch auslaufenden Gewinde versehen sind, in eine mit entsprechendem Innengewinde (2) versehene Metallmuffe (1) hergestellt ist, **gekennzeichnet durch** eine Muffe (1), deren beiden Endbereiche (3) außen eine zur Muffenmitte hin progressiv ansteigende Kontur aufweisen.

2. Schraubmuffenverbindung nach Anspruch 1, **gekennzeichnet** durch eine Muffe (1), die innen an den Muffenenden ein Fase (4) aufweist.

3. Schraubmuffenverbindung nach den Ansprüchen 1 u. 2, **dadurch gekennzeichnet,** daß die Muffenlänge und die Länge der mit Gewinde versehenen Stabenden (6) so abgestimmt sind, daß unter Aufbringung eines bestimmten Drehmomentes nach Eindrehen der Stäbe (5) bis zum Anschlag der Muffe (1) an das Gewindeende (8) der Stäbe noch ein geringer Zwischenraum (10) zwischen den Stirnflächen (9) der Stabenden verbleibt, dessen Breite so bestimmt ist, daß - wenn bei ungewollter Überschreitung dieses Drehmomentes beim Eindrehen des anschließenden Stabendes (6) in die Muffe (1) - der Zwischenraum (10) zu null werden sollte, die durch diese maximale Einschraubtiefe der Stabenden bedingte Dehnung und Aufweitung der Muffenenden noch ohne Aufreißen vom Muffenmaterial aufgenommen werden.

## Claims

1. A screwed-gland joint - mainly for reinforcement rods - which is produced by screwing two metal rods (5), provided at their ends (6) with a thread which terminates in a conical formation in the thread end zone (7), into a metal sleeve (1) provided with a corresponding internal thread (2), characterized by a sleeve (1), the two end zones (3) of which possess an external contour which ascends progressively towards the centre of the sleeve.

2. A screwed-gland joint as claimed in Claim 1, characterised by a sleeve (1) which is provided with an internal chamfer (4) at its ends.

3. A screwed-gland joint as claimed in Claims 1 and 2, characterised in that the length of the sleeve and the length or the threaded rod ends (6) are coordinated in such manner that with the application of a specific torque, when the rods (5) have been screwed in until the sleeve (1) abuts against the threaded end (8) of the rods, a small space (10) still remains between the end faces (9) of the rod ends, where the width of said space (10) is so defined that if - in the event that this torque were unintentionally exceeded when the adjacent rod end (6) is screwed into the sleeve (1) - the space (10) were to reduce to zero, the extension and expansion of the sleeve ends produced by this maximum screw-in depth of the rod ends would be still accommodated without rupture of the sleeve material.

## Revendications

1. Assemblage par manchon à visser, notamment pour barres d'armature, réalisé par vissage, dans un manchon métallique (1) muni d'un filetage intérieur correspondant (2), de deux barres métalliques (5) dont les extrémités (6) présentent, dans la zone terminale du filetage (7), un filetage s'élargissant coniquement, caractérisé par le fait que le manchon (1) présente deux zones terminales (3) dont le contour extérieur monte progressivement en direction du milieu du manchon.

2. Assemblage par manchon à visser selon la revendication 1, caractérisé par le fait que le manchon (1) présente à ses extrémités, du côté intérieur, un chanfrein (4).

3. Assemblage par manchon à visser selon les revendications 1 et 2, caractérisé par le fait que la longueur du manchon et la longueur des extrémités de barres (6) présentant un filetage sont accordées de telle façon que, lorsqu'un couple déterminé est appliqué pour visser les barres jusqu'à la butée du manchon (1) contre l'extrémité du filetage (8) des barres, il subsiste encore un petit espace intermédiaire (10) entre les faces frontales (9) des extrémités de barres, dont la largeur est déterminée de telle façon que cet espace intermédiaire (10) devienne nul en cas de dépassement intempestif de ce couple lors du vissage de l'extrémité de barre (6) correspondante dans le manchon (1), et que l'allongement et l'élargissement des extrémités de manchon correspondant à cette profondeur maximale de vissage des extrémités de barres soient encore supportés par le matériau du manchon sans que celui-ci se fende.
